(19) Europäisches Patentamt
European Patent Office
Office européen des brevets

(11) **EP 3 151 147 B1**

(12) **EUROPEAN PATENT SPECIFICATION**

(45) Date of publication and mention
of the grant of the patent:
**13.12.2017 Bulletin 2017/50**

(51) Int Cl.:
***G06F 21/55*** *(2013.01)*  ***G06F 21/56*** *(2013.01)*
***G06F 21/62*** *(2013.01)*  *G06F 21/60* *(2013.01)*

(21) Application number: **15202318.0**

(22) Date of filing: **23.12.2015**

(54) **SYSTEM AND METHOD FOR DETECTION OF MALICIOUS DATA ENCRYPTION PROGRAMS**

SYSTEM UND VERFAHREN ZUR ERKENNUNG BÖSARTIGER
DATENVERSCHLÜSSELUNGSPROGRAMME

SYSTÈME ET PROCÉDÉ DE DÉTECTION DE PROGRAMMES DE CRYPTAGE DE DONNÉES
MALVEILLANTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2015 RU 2015141551
25.11.2015 US 201514951970**

(43) Date of publication of application:
**05.04.2017 Bulletin 2017/14**

(73) Proprietor: **AO Kaspersky Lab
Moscow 125212 (RU)**

(72) Inventors:
• **OVCHARIK, Vladislav I.
MOSCOW 125212 (RU)**
• **BYKOV, Oleg G.
MOSCOW 125212 (RU)**

(74) Representative: **Chimini, Francesco
Jacobacci & Partners S.p.A.
Piazza della Vittoria 11
25122 Brescia (IT)**

(56) References cited:
**US-A1- 2003 110 391    US-A1- 2015 058 987
US-B2- 8 856 542**

## Description

## Field of Technology

The present invention relates generally to the field of computer security, and, more specifically, to systems and methods for detecting malicious data encryption programs.

## Background

Data encryption programs (cryptors) have become popular form of malicious software, which when launched on a user's computer encrypt the most important data (such as images, text files and other files typically used by the computer user). After the encryption, the user is asked to pay the hacker money in order to get the key for decrypting his files. Given that hackers are making ever increasing use of asymmetrical encryption, it is practically impossible to restore the user's data without knowledge of the private key for decryption of the user data. An example of such encryption programs is the malicious program CryptoLocker.

The creators of antivirus applications have long known about such programs, and have developed a number of technologies able to detect encryption programs. For example, US Patent Application Pub No. 20150058987 describes an algorithm for calculating entropy to detect operation of file encryption malware. The application likewise considers excluding files based on their format type in order to reduce false alarms and increase the operating speed.

Such detection methods have proven themselves well, being able to detect an encryption malware in good time when operating on a user's computer. However, there is a problem related to the fact that, if a malicious encryption program is analyzing the drives on the user's computer on which it will then encrypt the data, if it comes upon a network drive (which resides physically on a server) the malicious program may also encrypt the data on the server. Of course, backtracking all the file activity on the server would allow this problem to be resolved, but this significantly reduces the operational productivity of the server, which is often unacceptable in a corporate environment. Thus, a new solution is needed for detecting malicious encryption programs launched from a client on a server.

## Summary

Disclosed are systems and method for detection of malicious encryption programs. In one example, a method for detection of malicious encryption programs comprising: intercepting, at a server, a file operation request from a client on a file stored on the server; collecting information about at least the requested file and the requested operation; determining, by a hardware processor of the server, based on the collected information, whether the file operation request came from a known malicious encryption program; when the file operation request came from an unknown program, then calculating, by the hardware processor, entropies of at least a portion of the file before and after the execution of the requested operation on the file; and calculating, by the hardware processor, a difference between the calculated entropies; when the difference is below a threshold, allowing the requested operation on the file; and when the difference is above the threshold, denying the requested operation on the file.

In one example, intercepting a request to access a file stored on the server includes, intercepting the request by a file system driver filter.

In one example, intercepting a request to access a file stored on the server includes, intercepting a system function call and one or more parameters of the call.

In one example, intercepting a request to access a file stored on the server further includes, creating at the server a backup copy of the requested file.

In one example, collecting information about the requested file and the requested operation includes, collecting one or more of: type of the requested file operation, and data buffers with original file contents and modified file contents.

In one example, when the file operation request came from a known malicious encryption program, denying the requested operation on the file.

In one example, calculating entropies of at least a portion of the file includes, calculating entropies of at least portions of file headers before and after the execution of the requested operation on the file.

In another example, a system for detection of malicious encryption programs comprises: a server having a hardware processor configured to intercept a file operation request from a client on a file stored on the server; collect information about at least the requested file and the requested operation; determine based on the collected information, whether the file operation request came from a known malicious encryption program; when the file operation request came from an unknown program, then calculate entropies of at least a portion of the file before and after the execution of the requested operation on the file; and calculate a difference between the calculated entropies; when the difference is below a threshold, allow the requested operation on the file; and when the difference is above the threshold, deny the requested operation on the file.

The above simplified summary of example aspects of the invention serves to provide a basic understanding of the invention. This summary is not an extensive overview of all contemplated aspects, and is intended to neither identify key or critical elements of all aspects nor delineate the scope of any or all aspects of the invention. Its sole purpose is to present one or more aspects in a simplified form as a prelude to the more detailed description of the invention that follows. To the accomplishment of the foregoing, the one or more aspects of the present invention include the features described and particularly pointed out in the claims.

**Brief Description of the Drawings**

The accompanying drawings, which are incorporated into and constitute a part of this specification, illustrate one or more example aspects of the present invention and, together with the detailed description, serve to explain their principles and implementations.

**Fig. 1** illustrates an example of operation of a malicious encryption program at the server site.
**Fig. 2** illustrates an exemplary system for detection of malicious encryption programs.
**Fig. 3** illustrates an exemplary method for detection of malicious encryption programs.
**Fig. 4** illustrates an example probability function.
**Fig. 5** illustrates an example of a computer system which can be used to implement various examples of systems and methods of the present invention.

**Detailed Description of Exemplary Aspects of the Invention**

Example aspects of the present invention are described herein in the context of a system, method, and computer program product for detection of malicious encryption programs. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

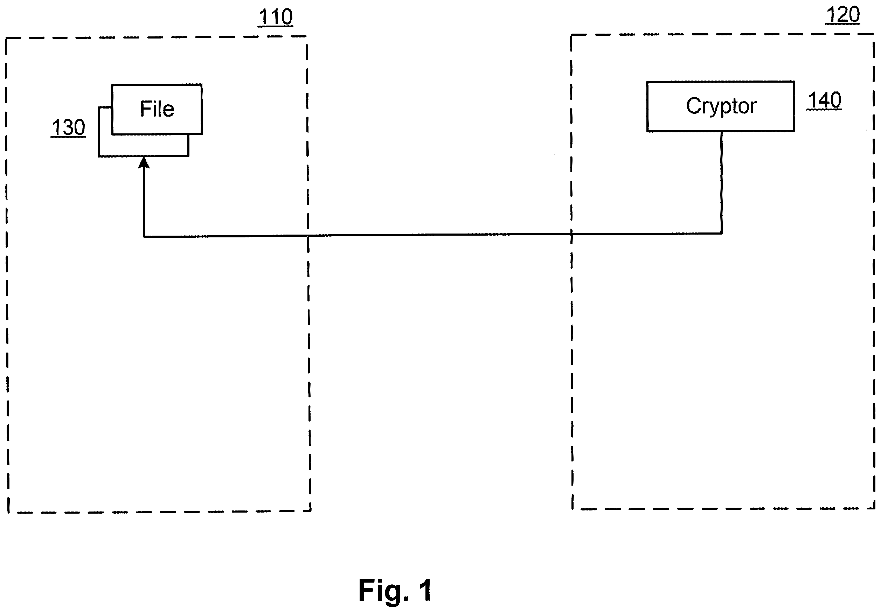

**Fig. 1** shows example of operation of a malicious encryption program at the server site. A malicious encryption program **140** is launched on a user's computer **120**. This can be done by the user himself, believing the program **140** to be a clean program, or the program **140** may launch itself, for example, at the startup of the computer **120** through a registry key used for autostart. If the network drive on the server **110** is connected from the computer **120**, the encryption program **140** can also encrypt files **130** on the network drive of the server **110**.

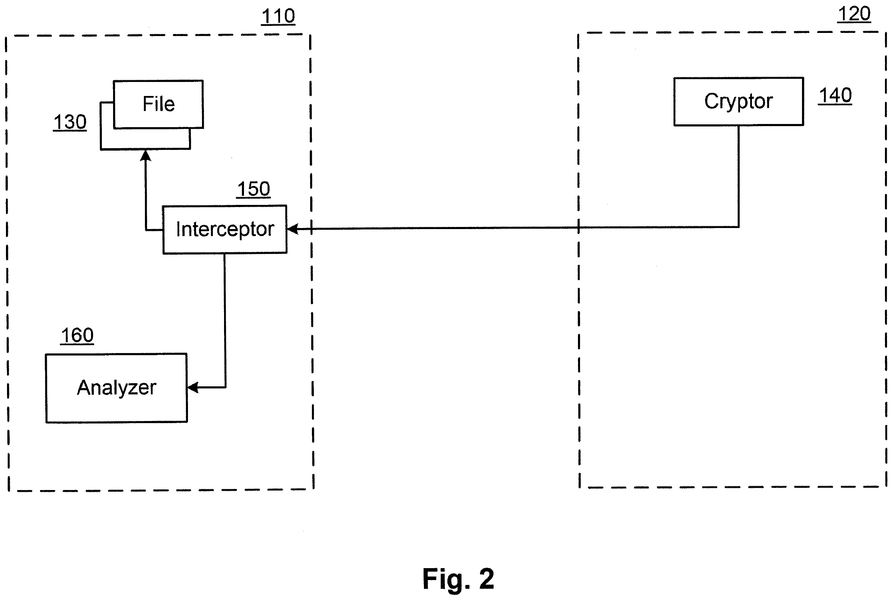

**Fig. 2** shows an exemplary system for detection of malicious encryption programs. As compared to **Fig. 1**, the system further includes an interceptor **150** and an analyzer **160**. In one example, the interceptor **150** may be a file filter driver, and the analyzer **160** may be an antivirus application, such as Kaspersky Lab Antivirus. The interceptor **150** intercepts requests for accessing files **130** and sends the data to the analyzer **160**. In one example, the intercepting of file access requests may include interception of such system function calls as CreateFile, ReadFile/WriteFile, DeleteFile, GetFileInformationByHandle, FindFirstFile and others (this list of functions is applicable to the Windows operating system).

In order to detect the actual execution of the malicious encryption program **140**, it is desirable to intercept not only a system function call, but also data which this function tries to write in place of the original file **130**. It should be noted that malicious encryption programs **140** can generally work according to two algorithms for the encrypting of files **130**: first, they can create a copy of the file **130** and encrypt its data into the created copy, after which the original file **130** is deleted; second, they can directly overwrite the data of the file **130**, reading the original data into a buffer, encrypting it, and then rewriting it.

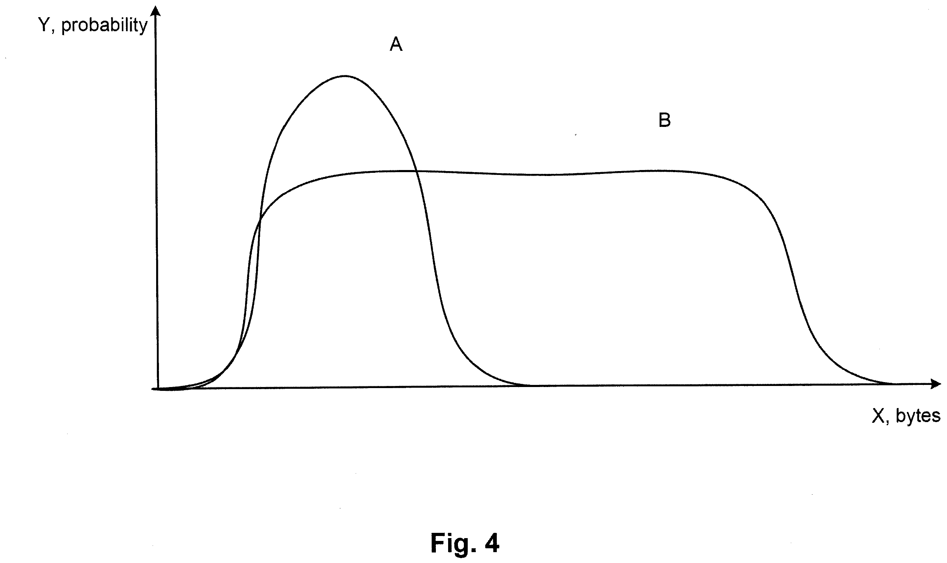

In the context of the present invention, a known approach of calculating entropy when data is written to a drive may be used to detect the execution of malicious encryption program **140**. The definition of informational entropy (hereinafter, simply entropy) is given in the article The Mathematical Theory of Communication, (c) 1949 by the Board of Trustees of the University of Illinois. **Fig. 4** shows an example of the calculation of entropy for one and the same file before and after its encryption. Along the X axis are plotted the bytes (such as the characters a, b, c and so on), and along the Y axis the probability of their occurrence in a file. A characteristic graph - the probability function - determines the probability of appearance of a character (byte) in a file. Entropy shows how many bits are needed to encode this information (character). Thus, the less information in the file, the greater the entropy. For example, for a text file where there were only English characters, the entropy will be less than after its encryption (encrypted text looks like mixture of random characters).

The probability function A in **Fig. 4** is characteristic for an unencrypted file, where a limited set of characters has the greatest probability of occurrence - this is true for text files, and also for headers of binary files, since the header describes the type (format) of the file. After the file is encrypted by the encryption program **140** the probability function takes on the form of function B, where a different number of characters will occur with approximately identical frequency.

One of the known method for detection of an encryption program **140** is to calculate the "convergence" of entropy, that is, the difference between two entropies. If the "convergence" (hereafter used without quotation marks) is greater than a certain threshold, then it is definite that the file has been changed (e.g., encrypted). The maximum convergence value is equal to several dozen bytes. The convergence can be calculated using the formula:

$$P = \left\| H_{modified} - H_{original} \right\|$$

Where P is the convergence value in bytes, $H_{modified}$ is the entropy value after the changing of the file (encryption), $H_{original}$ is the entropy value before changing the file.

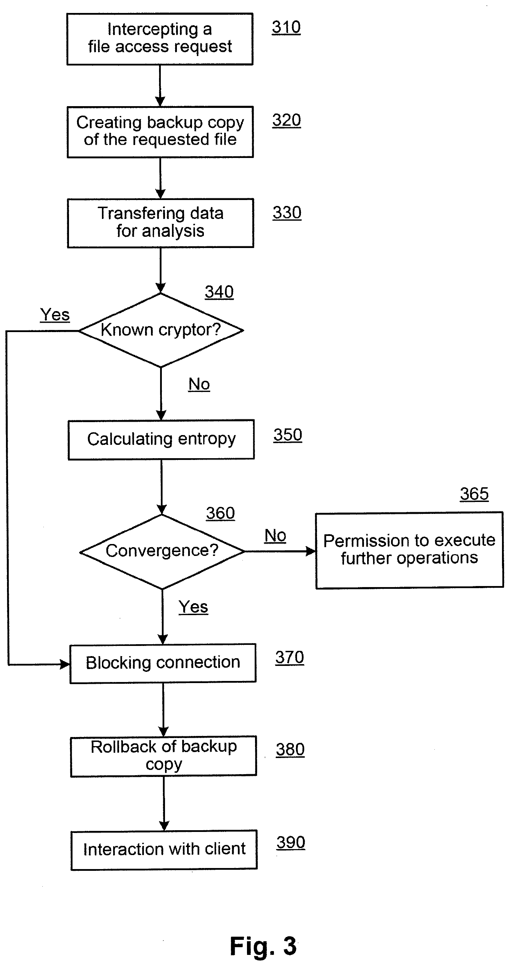

**Fig. 3** illustrates an exemplary method for detection of malicious encryption programs. In step **310,** a file operation (request to access the file) is intercepted from the user's computer **120** on the server **110**. In step **320,** a backup copy of the file is created, which is subjected to the change. In one example, the creation of the backup file copy can be realized by copying the file into the same directory (or a temporary directory for storing backup copies). An example of an application that performs backup copying is Acronis Backup & Recovery.

In step **330,** information about the intercepted file operation is dispatched for analysis to the analyzer **160**. The data may include, but not limited to: the type of file operation (e.g., the API function called), the data buffers (with original file content and modified content), and data about the user's computer **120**. In step **340,** the buffer of the data which will be written into the file **130** are analyzed. If it is determined that, based on the results of the analysis of the data buffer, a known encryption program **140** is attempting to carry out the requested file operation, then in step **370** the connection between the user's computer **120** and the server **110** is blocked or closed. The further steps will be discussed below.

But if no known encryption program **140** was detected based on the analysis of the data, in step **350,** the analyzer **160** calculates entropy of the overwritten file segment and calculates convergence for the entropy of the original and the overwritten file segment. In one example, the analyzer **160** may analyze the file header, which includes the description of the format (type) of the file **130**. When the file is encrypted the file header is overwritten, which results in a change in the file format (loss thereof). As a rule, the first few kilobytes of the file are sufficient for such an analysis. This analysis is performed in step **360** and, if the convergence does not exceed a given threshold, then in step **365** the further file operations on the part of the user's computer **120** are allowed.

If the convergence of entropy exceeds the given threshold, the analyzer **160** concludes that encryption program **140** is executing on the user's computer **120,** and in step **370** blocks (or breaks) the connection between the user's computer **120** and the server **110.** In step **380,** the backup copy of the file is restored (rollback) on the server **110.**

It is important to note that the execution of file operations on the part of the user's computer **120** is not blocked, and they are executed without delay on the part of the analyzer **160** - so-called asynchronous operation. On the other hand, the execution of file operations occurs without loss of productivity, but this requires the creation of backup copies, since the original file is partly overwritten (encrypted) during asynchronous operation.

In step **390,** an interaction occurs between the analyzer **160** and the user's computer **120.** In this case, if an antivirus application (not shown) has been installed on the user's computer **120,** the analyzer **160** can obtain from it information about the process (the name of the process, how long the process is working, the hash sum of the file from which the process was launched, the presence of a digital signature, and so on) which is now working with the files **130** on the server **110.** In one example, the CIFS protocol (Common Internet File System) may be used for this purpose.

We shall present an example of the interaction between the analyzer **160** and the antivirus application on the user's computer **120.** After the interception by the interceptor **150** of the file operation from the user's computer **120** on the server **110** and after obtaining a verdict from the analyzer **160** as to the actual execution of the encryption program **140,** information about the process which is encrypting the files **130** is sent to the antivirus application at the user's computer **120.** As an example, the information may include:

The name of the process: winserv.exe
Presence of a digital signature: no

Based on the information obtained, the antivirus application on the user's computer **120** starts a search for the process with the indicated name winserv.exe among all processes launched in the system, and after finding it, the antivirus application stops the found process and removes the file from which it was launched.

In yet another example, the files **130** are stored not on the server **110,** but on a network data storage system (NAS, Network Attached Storage, not shown in **Fig. 2**), which is connected to the server **110.** A peculiarity of working with a network data storage system is that it requires an extension (or support) of a data exchange protocol between it and the server **110.** In one example, the ICAP (Internet Content Adaptation Protocol) protocol extension may be required.

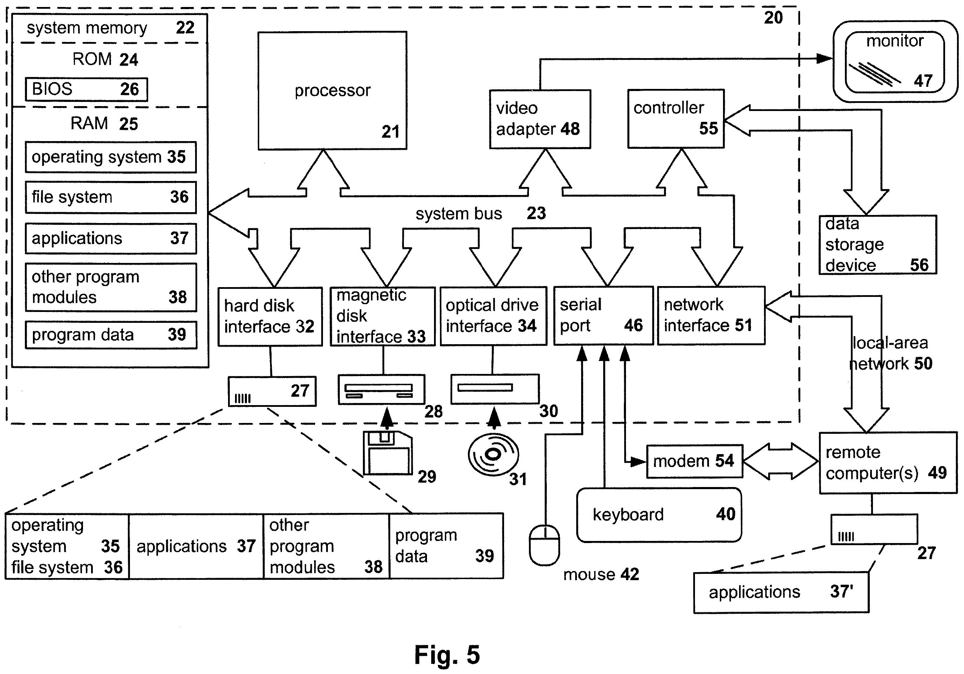

**Fig. 5** illustrates an example of a general-purpose computer system (which may be a personal computer or a server) on which the disclosed systems and method can be implemented. As shown, the computer system includes a central processing unit 21, a system memory 22 and a system bus 23 connecting the various system components, including the memory associated with the central processing unit 21. The system bus 23 is realized like any bus structure known from the prior art, containing in turn a bus memory or bus memory controller, a peripheral bus and a local bus, which is able to interact with any other bus architecture. The system memory includes permanent memory (ROM) 24 and random-access memory (RAM) 25. The basic input/output system (BIOS) 26 includes the basic procedures ensuring the transfer of information between elements of the personal computer 20, such as those at the time of loading the operating system with the use of the ROM 24.

The personal computer 20, in turn, includes a hard disk 27 for reading and writing of data, a magnetic disk drive 28 for reading and writing on removable magnetic disks 29 and an optical drive 30 for reading and writing on removable optical disks 31, such as CD-ROM, DVD-ROM and other optical information media. The hard disk 27, the magnetic disk drive 28, and the optical drive 30 are connected to the system bus 23 across the hard disk interface 32, the magnetic disk interface 33 and the optical drive interface 34, respectively. The drives and the corresponding computer information media are power-independent modules for storage of computer instructions, data structures, program modules and other data of the personal computer 20.

The present disclosure provides the implementation of a system that uses a hard disk 27, a removable magnetic disk 29 and a removable optical disk 31, but it should be understood that it is possible to employ other types of computer information media 56 which are able to store data in a form readable by a computer (solid state drives, flash memory cards, digital disks, random-access memory (RAM) and so on), which are connected to the system bus 23 via the controller 55.

The computer 20 has a file system 36, where the recorded operating system 35 is kept, and also additional program applications 37, other program modules 38 and program data 39. The user is able to enter commands and information into the personal computer 20 by using input devices (keyboard 40, mouse 42). Other input devices (not shown) can be used: microphone, joystick, game controller, scanner, and so on. Such input devices usually plug into the computer system 20 through a serial port 46, which in turn is connected to the system bus, but they can be connected in other ways, for example, with the aid of a parallel port, a game port or a universal serial bus (USB). A monitor 47 or other type of display device is also connected to the system bus 23 across an interface, such as a video adapter 48. In addition to the monitor 47, the personal computer can be equipped with other peripheral output devices (not shown), such as loudspeakers, a printer, and so on.

The personal computer 20 is able to operate in a network environment, using a network connection to one or more remote computers 49. The remote computer (or computers) 49 are also personal computers or servers having the majority or all of the aforementioned elements in describing the nature of a personal computer 20. Other devices can also be present in the computer network, such as routers, network stations, peer devices or other network nodes.

Network connections can form a local-area computer network (LAN) 50 and a wide-area computer network (WAN). Such networks are used in corporate computer networks and internal company networks, and they generally have access to the Internet. In LAN or WAN networks, the personal computer 20 is connected to the local-area network 50 across a network adapter or network interface 51. When networks are used, the personal computer 20 can employ a modem 54 or other modules for providing communications with a wide-area computer network such as the Internet. The modem 54, which is an internal or external device, is connected to the system bus 23 by a serial port 46. It should be noted that the network connections are only examples and need not depict the exact configuration of the network, i.e., in reality there are other ways of establishing a connection of one computer to another by technical communication modules.

In various examples, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various examples, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module can also be implemented as a combination of the two, with certain functions facilitated by hardware alone, and other functions facilitated by a combination of hardware and software. In certain implementations, at least a portion, and in some cases, all, of a module can be executed on the processor of a general purpose computer (such as the one described in greater detail in Fig. 5 above). Accordingly, each module can be realized in a variety of suitable configurations, and should not be limited to any particular implementation exemplified herein.

In the interest of clarity, not all of the routine features of the example aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

**Claims**

1. A method for detection of malicious encryption programs, the method comprising:

   intercepting, at a server, a file operation request from a client on a file stored on the server;
   collecting information about at least the requested file and the requested operation;
   determining, by a hardware processor of the server, based on the collected information, whether the file operation request came from a known malicious encryption program or an unknown program;
   when the file operation request is determined to have come from a known malicious program, then denying the requested operation on the file;
   when the file operation request is determined to have come from an unknown program, then calculating, by the hardware processor, entropies of at least a portion of the file before and after the execution of the requested operation on the file; and
   calculating, by the hardware processor, a difference between the calculated entropies;
   when the difference is below a threshold, allowing the requested operation on the file; and
   when the difference is above the threshold, denying the requested operation on the file.

2. The method according to claim 1, wherein intercepting a request to access a file stored on the server includes, intercepting the request by a file system driver filter.

3. The method according to any of claims 1 to 2, wherein intercepting a request to access a file stored on the server includes, intercepting a system function call and one or more parameters of the call.

4. The method according to any of claims 1 to 3, wherein intercepting a request to access a file stored on the server further includes, creating at the server a backup copy of the requested file.

5. The method according to any of claims 1 to 4, wherein collecting information about the requested file and the requested operation includes, collecting one or more of: type of the requested file operation, and data buffers with original contents of the file before execution of the requested operation and modified contents of the file after execution of the requested operation.

6. The method according to claim 4, wherein when the file operation request is determined to have came from an unknown program, the file operation request is executed asynchronously relative to other file operations on the file; and the backup copy is used to restore an original contents of the file before execution of the requested operation if the difference between the calculated entropies is above the threshold.

7. The method according to any of claims 1 to 6, wherein calculating entropies of at least a portion of the file includes, calculating entropies of at least portions of file headers before and after the execution of the requested operation on the file.

8. A system for detection of malicious encryption programs, the system comprising:

   a server having a hardware processor configured to:

      intercept a file operation request from a client on a file stored on the server;
      collect information about at least the requested file and the requested operation;
      determine based on the collected information, whether the file operation request came from a known malicious encryption program or an unknown program;
      when the file operation request is determined to have come from a known malicious program, deny the requested operation on the file;
      when the file operation request is determined to have come from an unknown program, then

         calculate entropies of at least a portion of the file before and after the execution of the requested operation on the file; and
         calculate a difference between the calculated entropies;

when the difference is below a threshold, allow the requested operation on the file; and

when the difference is above the threshold, deny the requested operation on the file.

9. The system according to claim 8, wherein intercepting a request to access a file stored on the server includes, intercepting the request by a file system driver filter.

10. The system according to any of claims 8 to 9, wherein intercepting a request to access a file stored on the server includes, intercepting a system function call and one or more parameters of the call.

11. The system according to any of claims 8 to 10, wherein intercepting a request to access a file stored on the server further includes, creating at the server a backup copy of the requested file.

12. The system according to any of claims 8 to 11, wherein collecting information about the requested file and the requested operation includes, collecting one or more of: type of the requested file operation, and data buffers with original contents of the file before execution of the requested operation and modified contents of the file after execution of the requested operation.

13. The system according to claim 11, wherein, when the file operation request is determined to have came from an unknown program, the file operation request is executed asynchronously relative to other file operations on the file; and the backup copy is used to restore an original version of the file before execution of the requested operation if the difference between the calculated entropies is above the threshold.

14. The system according to any of claims 8 to 13, wherein calculating entropies of at least a portion of the file includes, calculating entropies of at least portions of file headers before and after the execution of the requested operation on the file.

**Patentansprüche**

1. Verfahren zum Detektieren von bösartigen Verschlüsselungsprogrammen, wobei das Verfahren umfasst:

Abfangen einer Dateioperations-Anfrage von einem Client an einem Server auf eine Datei, welche auf dem Server gespeichert ist;
Sammeln von Informationen über wenigstens die angefragte Datei und die angefragte Operation;
Bestimmen durch einen Hardware-Prozessor des Servers auf Grundlage der gesammelten Informationen, ob die Dateioperations-Anfrage von einem bekannten bösartigen Verschlüsselungsprogramm oder einem unbekannten Programm kam;
wenn bestimmt wird, dass die Dateioperations-Anfrage von einem bekannten bösartigen Programm gekommen ist, dann Verweigern der angefragten Operation auf die Datei;
wenn bestimmt wird, dass die Dateioperations-Anfrage von einem unbekannten Programm gekommen ist, dann
Berechnen von Entropien von wenigstens einem Teil der Datei vor und nach dem Ausführen der angefragten Operation auf die Datei durch den Hardware-Prozessor; und
Berechnen einer Differenz zwischen den berechneten Entropien durch den Hardware-Prozessor;
wenn die Differenz unterhalb eines Schwellenwerts liegt, Erlauben der angefragten Operation auf die Datei; und
wenn die Differenz oberhalb eines Schwellenwerts liegt, Verweigern der angefragten Operation auf die Datei.

2. Verfahren nach Anspruch 1, wobei das Abfangen einer Anfrage zum Zugreifen auf eine auf dem Server gespeicherte Datei ein Abfangen der Anfrage durch einen Dateisystem-Treiberfilter umfasst.

3. Verfahren nach einem der Ansprüche 1 bis 2, wobei das Abfangen einer Anfrage zum Zugreifen auf eine auf dem Server gespeicherte Datei ein Abfangen eines Systemfunktions-Aufrufs und eines oder mehrerer Parameter des Aufrufs umfasst.

4. Verfahren nach einem der Ansprüche 1 bis 3, wobei das Abfangen einer Anfrage zum Zugreifen auf eine auf dem Server gespeicherte Datei ferner ein Erzeugen einer Backup-Kopie der angefragten Datei auf dem Server umfasst.

5. Verfahren nach einem der Ansprüche 1 bis 4, wobei das Sammeln von Informationen über die angefragte Datei und die angefragte Operation ein Sammeln von einem oder mehreren umfasst, aus: Typ der angefragten Dateioperation und Datenpuffern mit ursprünglichen Inhalten der Datei vor dem Ausführen der angefragten Operation und modifizierten Inhalten der Datei nach dem Ausführen der angefragten Operation.

6. Verfahren nach Anspruch 4, wobei wenn bestimmt wird, dass die Dateioperations-Anfrage von einem unbekannten Programm gekommen ist, die Dateioperations-Anfrage asynchron bezüglich anderen Dateioperationen auf die Datei durchgeführt wird; und die Backup-Kopie verwendet wird, um ursprüngliche Inhalte der Datei vor dem Ausführen der angefragten Operation wiederherzustellen, wenn die Differenz zwischen den berechneten Entropien oberhalb des Schwellenwerts liegt.

7. Verfahren nach einem der Ansprüche 1 bis 6, wobei das Berechnen von Entropien von wenigstens einem Teil der Datei ein Berechnen von Entropien von wenigstens Teilen von Datei-Headern vor und nach dem Ausführen der angefragten Operation auf die Datei umfasst.

8. System zum Detektieren von bösartigen Verschlüsselungsprogrammen, wobei das System umfasst:

   einen Server mit einem Hardware-Prozessor, welcher dazu eingerichtet ist:

   eine Dateioperations-Anfrage von einem Client auf eine auf dem Server gespeicherte Datei abzufangen;
   Informationen über wenigstens die angefragte Datei und die angefragte Operation zu sammeln;
   auf Grundlage der gesammelten Informationen zu bestimmen, ob die Dateioperations-Anfrage von einem bekannten bösartigen Verschlüsselungsprogramm oder einem unbekannten Programm kam;
   wenn bestimmt wird, dass die Dateioperations-Anfrage von einem bekannten bösartigen Programm gekommen ist, die angefragte Operation auf die Datei zu verweigern;
   wenn bestimmt wird, dass die Dateioperations-Anfrage von einem unbekannten Programm gekommen ist, dann:

   Entropien von wenigstens einem Teil der Datei vor und nach dem Durchführen der angefragten Operation auf die Datei zu berechnen; und
   eine Differenz zwischen den berechneten Entropien zu berechnen;

   wenn die Differenz unter einem Schwellenwert liegt, die angefragte Operation auf die Datei zu erlauben; und
   wenn die Differenz oberhalb des Schwellenwerts liegt, die angefragte Operation auf die Datei zu verweigern.

9. System nach Anspruch 8, wobei das Abfangen einer Anfrage zum Zugreifen auf eine auf dem Server gespeicherte Datei ein Abfangen der Anfrage durch einen Dateisystem-Treiberfilter umfasst.

10. System nach einem der Ansprüche 8 bis 9, wobei das Abfangen einer Anfrage zum Zugreifen auf eine auf dem Server gespeicherte Datei ein Abfangen eines Systemfunktions-Aufrufs und eines oder mehrerer Parameter des Aufrufs umfasst.

11. System nach einem der Ansprüche 8 bis 10, wobei das Abfangen einer Anfrage zum Zugreifen auf eine auf dem Server gespeicherte Datei ferner ein Erzeugen einer Backup-Kopie der angefragten Datei auf dem Server umfasst.

12. System nach einem der Ansprüche 8 bis 11, wobei das Sammeln von Informationen über die angefragte Datei und die angefragte Operation ein Sammeln von einem oder mehreren umfasst, aus: Typ der angefragten Dateioperation und Datenpuffern mit ursprünglichen Inhalten der Datei vor dem Ausführen der angefragten Operation und modifizierten Inhalten der Datei nach dem Ausführen der angefragten Operation.

13. System nach Anspruch 11, wobei wenn bestimmt wird, dass die Dateioperations-Anfrage von einem unbekannten Programm gekommen ist, die Dateioperations-Anfrage asynchron bezüglich anderen Dateioperationen auf die Datei durchgeführt wird; und die Backup-Kopie verwendet wird, um eine ursprüngliche Version der Datei vor dem Ausführen der angefragten Operation wiederherzustellen, wenn die Differenz zwischen den berechneten Entropien oberhalb des Schwellenwerts liegt.

14. System nach einem der Ansprüche 8 bis 13, wobei das Berechnen von Entropien von wenigstens einem Teil der Datei ein Berechnen von Entropien von wenigstens Teilen von Datei-Headern vor und nach dem Ausführen der angefragten Operation auf die Datei umfasst.

## Revendications

1. Procédé de détection de programmes de cryptage de données malveillantes, le procédé comprenant :

   l'interception, au niveau d'un serveur, d'une demande d'opération sur fichier qui émane d'un client, sur un fichier stocké sur le serveur ;
   la collecte d'informations sur au moins le fichier demandé et l'opération demandée ;
   la détermination, par un processeur matériel du serveur, sur la base des informations collectées, du fait que la demande d'opération sur fichier provienne d'un programme de cryptage de données malveillantes connu ou d'un programme inconnu ;

lorsque la demande d'opération sur fichier est déterminée comme provenant d'un programme de cryptage de données malveillantes connu, le refus de l'opération demandée sur le fichier ;

lorsque la demande d'opération sur fichier est déterminée comme provenant d'un programme inconnu,

le calcul, par le processeur matériel, des entropies d'au moins une partie du fichier avant et après l'exécution de l'opération demandée sur le fichier ; et

le calcul, par le processeur matériel, d'une différence entre les entropies calculées ;

lorsque la différence est inférieure à un seuil, l'autorisation de l'opération demandée sur le fichier ;

et

lorsque la différence est supérieure au seuil, le refus de l'opération demandée sur le fichier.

2. Procédé selon la revendication 1, dans lequel l'interception d'une demande d'accès à un fichier stocké sur le serveur comprend l'interception de la demande par un filtre de système de fichiers.

3. Procédé selon l'une quelconque des revendications 1 à 2, dans lequel l'interception d'une demande d'accès à un fichier stocké sur le serveur comprend l'interception d'un appel de fonction du système et d'un ou plusieurs paramètres de l'appel.

4. Procédé selon l'une quelconque des revendications 1 à 3, dans lequel l'interception d'une demande d'accès à un fichier stocké sur le serveur comprend en outre la création, au niveau du serveur, d'une copie de sauvegarde du fichier demandé.

5. Procédé selon l'une quelconque des revendications 1 à 4, dans lequel la collecte d'informations sur le fichier demandé et l'opération demandée comprend la collecte d'un ou plusieurs des éléments suivants : type d'opération sur fichier demandée, et mémoires tampon de données avec le contenu original du fichier avant l'exécution de l'opération demandée et le contenu modifié du fichier après l'exécution de l'opération demandée.

6. Procédé selon la revendication 4, dans lequel, lorsque la demande d'opération sur fichier est déterminée comme provenant d'un programme inconnu, la demande d'opération sur fichier est exécutée sur le fichier de manière asynchrone par rapport aux autres opérations sur fichiers ; et la copie de sauvegarde est utilisée pour rétablir une version originale du fichier avant l'exécution de l'opération demandée si la différence entre les entropies calculées est supérieure au seuil.

7. Procédé selon l'une quelconque des revendications 1 à 6, dans lequel le calcul des entropies d'au moins une partie du fichier comprend le calcul des entropies d'au moins des parties d'en-têtes de fichiers avant et après l'exécution de l'opération demandée sur le fichier.

8. Système de détection de programmes de cryptage de données malveillantes, le système comprenant :

un serveur ayant un processeur matériel configuré pour :

intercepter une demande d'opération sur fichier qui provient d'un client, sur un fichier stocké sur le serveur ;

collecter des informations sur au moins le fichier demandé et l'opération demandée ;

déterminer, sur la base des informations collectées, si la demande d'opération sur fichier provient d'un programme de cryptage de données malveillantes connu ou d'un programme inconnu ;

lorsque la demande d'opération sur fichier est déterminée comme provenant d'un programme de cryptage de données malveillantes connu, refuser l'opération demandée sur le fichier ;

lorsque la demande d'opération sur fichier est déterminée comme provenant d'un programme inconnu,

calculer les entropies d'au moins une partie du fichier avant et après l'exécution de l'opération demandée sur le fichier ; et

calculer une différence entre les entropies calculées ;

lorsque la différence est inférieure à un seuil, autoriser l'opération demandée sur le fichier ; et

lorsque la différence est supérieure au seuil, refuser l'opération demandée sur le fichier.

9. Système selon la revendication 8, dans lequel l'interception d'une demande d'accès à un fichier stocké sur le serveur comprend l'interception de la demande par un filtre de système de fichiers.

10. Système selon l'une quelconque des revendications 8 à 9, dans lequel l'interception d'une demande d'accès à un fichier stocké sur le serveur comprend l'interception d'un appel de fonction du système et d'un ou plusieurs paramètres de l'appel.

11. Système selon l'une quelconque des revendications 8 à 10, dans lequel l'interception d'une demande d'accès à un fichier stocké sur le serveur comprend en outre la création, au niveau du serveur, d'une copie de sauvegarde du fichier demandé.

**12.** Système selon l'une quelconque des revendications 8 à 11, dans lequel la collecte d'informations sur le fichier demandé et l'opération demandée comprend la collecte d'un ou plusieurs des éléments suivants : type d'opération sur fichier demandée, et mémoires tampon de données avec le contenu original du fichier avant l'exécution de l'opération demandée et le contenu modifié du fichier après l'exécution de l'opération demandée.

**13.** Système selon la revendication 11, dans lequel, lorsque la demande d'opération sur fichier est déterminée comme provenant d'un programme inconnu, la demande d'opération sur fichier est exécutée sur le fichier de manière asynchrone par rapport aux autres opérations sur fichier ; et la copie de sauvegarde est utilisée pour rétablir une version originale du fichier avant l'exécution de l'opération demandée si la différence entre les entropies calculées est supérieure au seuil.

**14.** Procédé selon l'une quelconque des revendications 8 à 13, dans lequel le calcul des entropies d'au moins une partie du fichier comprend le calcul des entropies d'au moins des parties d'en-têtes de fichiers avant et après l'exécution de l'opération demandée sur le fichier.

Fig. 1

**Fig. 2**

EP 3 151 147 B1

```
┌─────────────────────┐
│   Intercepting a    │  310
│ file access request │
└─────────────────────┘
          │
          ▼
┌─────────────────────┐
│ Creating backup copy│  320
│ of the requested file│
└─────────────────────┘
          │
          ▼
┌─────────────────────┐
│   Transfering data  │  330
│    for analysis     │
└─────────────────────┘
          │
          ▼
         340
Yes    ◇─────────◇
◄──────│ Known cryptor? │
       ◇─────────◇
          │ No
          ▼
┌─────────────────────┐
│  Calculating entropy│  350
└─────────────────────┘
          │
          ▼                        365
         360                 ┌─────────────────────┐
       ◇─────────◇    No     │ Permission to execute│
       │ Convergence? │─────►│  further operations  │
       ◇─────────◇           └─────────────────────┘
          │ Yes
          ▼
┌─────────────────────┐
│  Blocking connection│  370
└─────────────────────┘
          │
          ▼
┌─────────────────────┐
│  Rollback of backup │  380
│        copy         │
└─────────────────────┘
          │
          ▼
┌─────────────────────┐
│ Interaction with client│  390
└─────────────────────┘
```

**Fig. 3**

13

Fig. 4

**Fig. 5**

EP 3 151 147 B1

**EP 3 151 147 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150058987 A